# EUROPEAN PATENT APPLICATION

(11) **EP 1 148 088 A2**
(43) Date of publication of application: **24.10.2001**
(21) Application number: 01201398.3
(22) Date of filing: 17.04.2001
(51) Int. Cl.: C08J 9/18, C08L 25/08

(54) **Expandable polystyrene beads containing polyethylene**

(30) Priority: 17.04.2000 US 551174
(71) Applicant: FINA TECHNOLOGY, INC., Houston, Texas 77032 (US)
(72) Inventor: Barron, Jerry, Seabrook, Texas 77586 (US); Sosa, Jose M., Deer Park, Texas 77536 (US)
(74) Representative: Leyder, Francis

(57) **Abstract**

The present invention relates to a process for making beads of expandable polystyrene by utilizing as an additive in the suspension polymerization process, a small amount of a low-molecular-weight polyethylene having a molecular weight of around 2000.

## Description

### FIELD OF THE INVENTION

The present invention relates to a process for making expandable polystyrenes. More particularly, the present invention relates to expandable polystyrenes containing low molecular weight polyethylene.

### BACKGROUND OF THE INVENTION

Those skilled in the art are familiar with two main practices by which styrene may be polymerized, in a suspension-polymerization process, thereby obtaining beads of polystyrene having a molecular weight on the order of 150,000 to 300,000 and containing on the order of 4 to 8% of pentane as a blowing agent. In one of the known methods, styrene, water, a small proportion of protective colloids, such as polyvinylpyrrolidone, and small but effective proportion of one or more free-radical initiators, such as various peroxides and perbenzoates or the like, singly or in mixtures thereof, are stirred and heated to cause the polymerization to take place for beads of desired size. According to another suspension-polymerization procedure, water and styrene are charged to a polymerization kettle, along with an agent such as calcium phosphate, and heated with agitation, an emulsifier being added at a particular stage of the heating to influence the bead size. In either case, pentane or the like is added before, during or after the polymerization.

The use of additives of various kinds has been proposed, such as the addition of hexabromocyclododecane to inhibit the flammability of the product and to influence its cell structure.

In U.S. Patent No. 3,647,723, it is taught that styrene should be polymerized in the presence of a wax having a melting point of 70° to 123°, an acid number of 0 to 45, and a saponification number of from 3 to 150. This is said to reduce the tendency of the beads to stick or clump in the pre-expansion stage in hot water. The process is said to be applicable to suspension polymerization of the kind conducted in the presence of salt, and the patent goes on to teach a further decreasing of the stickiness of the beads by treating the beads with zinc, calcium, or aluminum salt of a fatty acid, such as zinc stearate.

U.S. Patent No. 3,320,188, teaches the addition of an ester wax of a high melting point, of at least 10°C higher than that of the solidification (Tg) point of the polymer, in an extrusion process of polystyrene or the like, to provide a nucleation effect.

U.S. Patent No. 2,979,476 teaches mixing polystyrene with about 1% of microcrystalline or Fisher-Tropsch waxes, to form bulk-polymerized materials which are useful for the manufacture of phonograph records.

U.S. Patent No. 3,060,138 is limited to making foamable polystyrene particles with the use of isopentane as a blowing agent and the addition of 0.5 to 3% of a paraffinic hydrocarbon having 16 to 46 carbon atoms. According to this patent, the use of isopentane is essential, if a desirably fine-celled product is to be obtained.

U.S. Patent No. 3,224,984 teaches the addition of 100 to 5,000 parts per million of a polyolefin wax or similar organic resinous polymeric substance. It teaches that the addition of such material gives a desirably small cell size, such as 80 microns, or about 12 cells per millimeter, implying that this result, which is desirable because it shortens the length of time that is necessary to keep the articles of expanded polystyrene in the mold and thus in the final molding operation, is brought about by the use of such organic resinous polymeric substance. The preferred material used is a polyolefin which comprises a mixture of homologous but different molecular species with various C₁ to C₄ side chains. The patent contains no teaching to the effect that a stable cell structure in expandable polystyrene can be obtained, independent from the internal water content of the beads, the polymerization conditions or recipe, or drying or storage conditions of the expandable polystyrene.

U.S. Patent No. 4,243,717 teaches that incorporating 500 to 5,000, preferably 2,000 to 4,000 parts per million of a Fisher-Tropsch wax of high congealing point into beads of expandable polystyrene made by suspension polymerization yields greater advantages, and conditions (time, temperatures, and recipe) of the polymerization become less critical. However, these Fischer-Tropsch type waxes are substantially different than the hard micro-crystalline waxes utilized in the present invention.

U.S. Patent No. 5,149,473 professes to teach a method for producing styrenic foamed insulation utilizing a blowing agent comprising a C₄-C₅ alkane, CO₂, hologenated ethane, and a plasticizer additive. In one embodiment the mentioned additive was a paraffin wax, and in a second embodiment the additive was a flame retarder, brominated phosphate ester.

It is well known in the industry that the cell structure of beads, when expanded shortly after the polymerization is completed, may vary sharply from the structure obtained after flash drying or after storage at different temperatures and/or humidities. Such variations are further enhanced by using different modifiers, like bromine compounds, which influence the flammability properties and may lead to a very heterogeneous, non-reproducible cell structure, even after applying the usual techniques of conditioning the product, i.e., subjecting the beads to the action of dry air. A reproducible, uniform cell structure, however, is a prime prerequisite for obtaining products with consistent properties in processing an application.

The subject of the invention is the production of expandable polystyrene with uniform, reproducible cell structure independent from the polymerization recipe, temperature and processing conditions prior to its use in expansion and molding, plus the combination of improved expandability, reduction of clumping, improved wet and dry bead flow, improved fusion, reduced water absorption, increased hydrophobicity, good mold release and excellent smooth surface, in particular of hot wire-cut boards made from blocks of expandable polystyrene.

### SUMMARY OF THE INVENTION

The present invention is directed to a process for making beads of expandable polystyrene by utilizing as a nucleating agent in the suspension polymerization process, a low molecular weight polyethylene (PE). During the polymerization process, the PE is added to the polystyrene by dispersing it in the styrene reaction mixture. Alternatively, the PE may be added by compounding it in the polymerized styrene.

### DESCRIPTION OF SPECIFIC EMBODIMENTS

Low molecular weight polyethylene (PE) is generally categorized as a homopolymer of polymerized ethylene monomer having a molecular weight, as calculated by Vapor Pressure Osmometry, of between about 500 and 3,000. Chemically, these PE's are fully saturated normal hydrocarbons useful in hot-melt coatings, adhesives, ink formulations, release agents, powder coatings, electrical insulation and as anti-block agents; as well as other uses. Desirable PEs for use in the present invention will exhibit low solubility in organic solvents at room temperature. They are most soluble in some cyclic hydrocarbons and aromatic hydrocarbons and least soluble in ketones, esters and alcohols. Low molecular weight PEs are particularly useful as nucleating agents and release agents in the processing of polyethylene, polystyrene, PVC, and other plastics.

The use of nucleating agents to control cell size in the foam industry is well known. The role of the nucleating agent whether in expandable polystyrene or extruded polystyrene foams is to provide a site for cell initiation. A nucleating agent should be easily and uniformly distributed throughout the polymer matrix. Normally such materials as waxes, talc, citric acid or other materials having low surface areas and very low solubilities in polystyrene are utilized. The particle size of the nucleating agent is also very important. Usually, the particle size varies from 0.5 to 5.0 microns. Generally speaking, the concentration of the nucleating agent will be determined by particle size, processability of the polymer matrix and the cell size desired. In the expandable polystyrene industry, neither extremely small (less than 10 microns) nor very large (greater than 250 microns) cells are desired.

We have found that in one preferred embodiment of the invention that a low molecular weight PE having a molecular weight of around 2000, an ASTM D 127 melting point of about 126°C, a penetration index (ASTM D-1321) at 60°C of less than about 2 and at 25°C of less than 1.0, a GPC polydispersity of around 1.1, a melt index (ASTM D 1238 FR-A) of less than 5000, and a viscosity at 149°C (ASTM D 88) of about 290, when added to polystyrene in amounts of around 500 parts per million (PPM) and foamed with conventional foaming agents such as pentane, produces a PS bead with exceptional gloss, optimum cell size, and optimum density.

As previously described, the PE may be compounded into the polymer or added to the reaction process during polymerization. In one instance a PE having the above-described properties and also exhibiting a density at 25°C (ASTM D 792 M) of 0.97 g/cc, and a specific gravity at 149°C (ASTM D 1298) of 0.77 g/cc, was added to a PS reactor manufacturing polystyrene to be foamed. Three samples of the polystyrene were produced with no PE present and were foamed and their cell structures measured utilizing a scanning electron microscope (SEM). Their average cell size without PE was measured to be in the range of 140-160 microns. Two samples of the five were manufactured containing 500 ppm of polyethylene with a molecular weight of 2000. The SEM measurements of cell size for these two samples indicated an average range at only 60-90 microns, with exceptional gloss exhibited by the finished PE foamed product.

One process for practicing the present invention involves introducing the styrene monomer into a reaction vessel and adding the appropriate catalyst, normally a peroxide. Water and suspension chemicals to get the polystyrene into a bead form are added and the polymerization is initiated by heating the reaction mixture to about 215°F. At any point up to this point, the PE is added. Normally it is desired that the temperature be greater than 160°F when the PE is added because such helps to better disperse the PE in the styrene mixture. The PE is introduced as a solid but as the temperature is increased up to the reaction temperature, the PE will melt and dissolve in the styrene. The polymerization reaction is allowed to proceed until the beads are very hard. At that point, a high temperature stage is initiated during which it is attempted to drive all the unreacted styrene out or to get the unreacted styrene to react. After such, the cooling down is started. At this point, a very uniform bead which could vary from 0.2 millimeters to 1.0 millimeters in diameter is obtained.

The beads are taken and optionally screened to desired sizes. The beads are subsequently placed in water and appropriate suspension chemicals. The suspension is heated to about 250° so that the bead will soften a little. At that point, blowing agents, such as pentanes, are introduced. This is known in the industry as the impregnation stage. Once the correct level of pentane is absorbed, the suspension is very carefully cooled down and de-pressurized. Otherwise, the beads will expand in the reactor. Suitable levels of blowing agents, such as pentane, are from 5.5 to 7.2% by weight of styrene. Once the beads are cooled, the beads go through a cleaning and drying process.

Thus the use of low molecular weight PE to replace conventional waxes and paraffins in the manufacture of foamed polystyrene is shown to provide increased control over cell size and improved gloss in the final product Whereas conventional foamed PS formulations require the presence of waxes, such as Fisher-Tropsch wax, in amounts ranging from 5000 to 15,000 PPM, the present invention eliminates the need for such large quantities of wax by replacing it with only about 500 PPM low-molecular weight polyethylene. Although not certain as to why this particular polymer is so beneficial to manufacturing foamed PS, it is believed that the PE may serve as a nucleator and/or provide a coating for the bead that prevents or reduces the loss of blowing agents from the bead. Either phenomenon would likely be responsible for the cell size improvement obtained by the process of the present invention.

Although the present invention has been described with preferred embodiments, it is to be understood that modifications and variations may be resorted to, without departing from the spirit and scope of this invention, as those skilled in the art will readily understand. Such modifications and variations are considered to be within the purview and scope of the appended claims. For example, it has been shown that a Polyethylene having a molecular weight of about 2000 was particularly useful in practicing the present invention; however, one skilled in the art would recognize that low-molecular-weight polyethylenes having different molecular weights, for instance, in the range of about 500 to about 30,000, would also be useful in the process.

## Claims

1. Beads of expandable polystyrene having a diameter of about 0.1 millimeter to about 5.0 millimeters and containing about 500 parts per million, based upon the weight of styrene, of a low-molecular-weight polyethylene polymer having a molecular weight of around 2000 and an amount of a blowing agent effective to permit said beads to be expanded to a final density of from about 0.65 lbs. to about 0.95 lbs. per cubic foot.

2. The Beads of Claim 1 wherein the blowing agent is a pentane, isopentane, inert gas or any combination thereof.

3. The beads of Claim 1 wherein the blowing agent is pentane and wherin the effective amount of blowing agent is from 5.0 to 7.2% by weight based on styrene.

4. The beads of Claim 1 wherein the polyethylene has a melting point of around 126°C, a viscosity at 149°C of around 290 and a penetration number at 25°C of around 0.5.

5. The beads of Claim 1 wherein the polyethylene has a density at 25°C of around 0.97 g/cc and a specific gravity at 149°C of around 0.77.

6. A process for preparing beads of expandable polystyrene by suspension polymerization comprising the steps of:
a) introducing a reaction mixture comprising styrene monomer into a reaction vessel;
b) heating the reaction mixture to attain polymerization temperature;
c) prior to attaining the polymerization temperature, adding to the reaction mixture about 500 parts per million by weight based on styrene, of a low-molecularweight polyethylene material having a molecular weight of around 2000;
d) reacting said styrene containing said polyethylene to form polystyrene beads;
e) separating the polystyrene beads from the reaction mixture; and
f) impregnating the beads with a blowing agent.

7. The process of claim 6 wherein said polyethylene added to said reaction mixture has melting point of around 126°C, a viscosity of 149°C of around 290, a density at 25°C of around 0.97, and a specific gravity at 149°C of around 0.77.
